(19) Europäisches Patentamt
European Patent Office
Office européen des brevets

(11) Veröffentlichungsnummer: **0 348 673 B1**

(12) **EUROPÄISCHE PATENTSCHRIFT**

(45) Veröffentlichungstag der Patentschrift: **04.08.93**

(51) Int. Cl.⁵: **H02H 3/28**

(21) Anmeldenummer: **89109559.8**

(22) Anmeldetag: **26.05.89**

(54) **Verfahren zum Schutz eines elektrischen Schutzobjektes.**

(30) Priorität: **28.06.88 CH 2459/88**

(43) Veröffentlichungstag der Anmeldung:
**03.01.90 Patentblatt 90/01**

(45) Bekanntmachung des Hinweises auf die Patenterteilung:
**04.08.93 Patentblatt 93/31**

(84) Benannte Vertragsstaaten:
**AT CH DE GB LI SE**

(56) Entgegenhaltungen:
**FR-A- 2 601 524**

**IEEE TRANS.ON POWER APPARATUS AND SYSTEMS vol. 96, no. 2, März 1977, NEW YORK Seiten 502 - 509; P.K.DASH: "DIGITAL DIFFERENTIAL PROTECTION OF A GENERATING UNIT"**

**IEE PROCEEDINGS vol. 123, no. 2, Februar 1976, HITCHIN,HERTS Seiten 170 - 171; P.K.DASH: "CROSSCORRELATION TECHNIQUE FOR DIFFERENTIAL-PROTECTION SCHEMES WITH A DIGITAL COMPUTER"**

(73) Patentinhaber: **ASEA BROWN BOVERI AG**
**Haselstrasse**
**CH-5401 Baden(CH)**

(72) Erfinder: **Fromm, Wilhelm, Dr.**
**Breitensteinstrasse 40**
**CH-5417 Untersiggenthal(CH)**

**EP 0 348 673 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Technisches Gebiet

Bei der Erfindung wird ausgegangen von einem Verfahren zum Schutz eines mindestens einphasigen elektrischen Schutzobjektes vor Ueberströmen nach dem Oberbegriff des Patentanspruchs 1.

Stand der Technik

Mit dem Oberbegriff nimmt die Erfindung auf einen Stand der Technik Bezug, wie er aus der FR-A1-2 601 524 bekannt ist. Dort wird mittels eines Differentialrelais eine Wechselstrommaschine auf innere Fehler überwacht. Mittels Stromwandlern werden je Wechselstromphase Eingangs- und Ausgangsströme der Wechselstrommaschine erfasst, davon nach Gleichrichtung und Verstärkung Differenzstromsignale abgeleitet und mit einem Grenzwert verglichen, der in Abhängigkeit von einem Maximalwert des halben Summenstromes gebildet wird. Der Maximalwert wird mit einer Zeitkonstante von 250 ms gespeichert. In Abhängigkeit von einer Grenzwertüberschreitung sorgt ein Ausgangsrelais für eine Abschaltung der Wechselstrommaschine. Die Relais-Auslösekurve weist anfänglich einen waagerechten und anschliessend 2 geneigte Auslöseabschnitte mit zunehmender Neigung auf. Für grosse Ströme kann es bei einer Stromwandlersättigung zu Fehlauslösungen kommen.

Durch "G.S. Hope, P.K. Dash, O.P. Malik: Digital Differential Protection of a Generating Unit, Scheme and Real-Time Test Results, IEEE Transactions on Power Apparatus and Systems, Vol. PAS-96, no. 2, March/April 1977" ist es bekannt, den Differentialschutz eines dreiphasigen Synchrongenerators mittels eines Hybridrechners durchzuführen, wobei vor und hinter dem Generator der Wechselstrom je Phase mittels Stromwandlern detektiert wird. Je Schwingungsperiode des netzfrequenten Stromes werden für jede Wechselstromphase 16 Proben genommen und daraus mittels Fourier-Analyse die grundfrequenten Komponenten des jeweiligen Wechselstromes berechnet. Zur Schutzauslösung ausgewertet werden für interne Fehler die Beträge jeweils des Differenz- und Summenstromes der zum Schutzobjekt zuund abfliessenden Wechselströme und für externe Fehler das Quadrat der jeweiligen Differenzströme und das Produkt der beiden Real- und der beiden Imaginärteile der zu- und und abliessenden Ströme. Es wird dabei mit einem nichtlinearen Empfindlichkeitsfaktor gearbeitet, der bei grossen Strömen grösser als bei kleineren ist und für interne Fehler negative Werte annimmt. Bei starker Stromwandlersättigung kann es dabei bei externen Fehlern zu Fehlauslösungen kommen.

Aus der Veröffentlichung von "G. Stranne, W.S. Kwong, T.H. Lomas, A Current Differential Relay for use with Digital Communication Systems: Its Design and Field Experience, 13th Annual Western Protective Relay Conference, Washington State University, Spokane, Washington, 21-23 October 1986", ist es bekannt, als Auslösekennlinie in einem Differenzstrom/Haltestrom-Diagramm eines Strom-Differentialrelais im Bereich kleiner Haltestromwerte eine Horizontale, entsprechend einem minimalen Ansprechstrom, und in einem anschliessenden Bereich grosser Haltestromwerte eine Diagonale vorzusehen. Als Differenzstrom wird die Summe der Ströme in Richtung auf das Schutzobjekt mittels eines Mikroprozessors berechnet und als Haltestrom die Hälfte der Summe der Beträge der einzelnen Ströme. Auch mit dieser Auslösekennlinie kann es zu Fehlauslösungen bei einer Stromwandlersättigung kommen.

Darstellung der Erfindung

Die Erfindung, wie sie im Patentanspruch 1 definiert ist, löst die Aufgabe, ein verbessertes Verfahren zum Schutz eines mindestens einphasigen elektrischen Schutzobjektes vor Ueberströmen anzugeben, das bei internen Fehlern bezüglich des Schutzobjektes, auch bei Sättigung von Stromwandlern, eine Schutzmassnahme auslöst und bei externen Fehlern, auch bei Sättigung von Stromwandlern, keine Schutzmassnahme auslöst.

Ein Vorteil der Erfindung besteht darin, dass weniger Fehlauslösungen vorkommen und praktisch alle Fehlerarten erfasst werden. Das Verfahren kann bei bereits bestehenden Schutzeinrichtungen, die einen Rechner verwenden, ohne Probleme durch Programmaustausch angewandt werden. Spezielle Massnahmen zur Beherrschung der Sättigung von Stromwandlern sind nicht erforderlich. Durch die spezielle Auslösecharakteristik werden interne Kurzschlüsse und auch bei einseitiger Speisung mit hoher Sicherheit erkannt.

Gemäss einer vorteilhaften Ausgestaltung der Erfindung können Einschaltstromstösse ohne internen Fehler erfasst werden, sodass es nicht zu fehlerhaften Schutzauslösungen kommt. Damit wird eine hohe Stabilität bei externen Kurzschlüssen und ungleicher Stromwandlersättigung erreicht.

Eine fehlerhafte Schutzauslösung bei Einschaltstromstössen wird durch einen Vergleich einer geradzahligen Harmonischen, insbesondere der zweiten Harmonischen, mit der grundfrequenten Schwingung vermieden. Für die zweite Harmonische brauchen weder Differenz- noch Halteströme berechnet zu werden. Bei Einschaltströmen und gleichzeitigem Kurzschluss im Schutzobjekt erfolgt die Schutzauslösung.

Kurze Beschreibung der Zeichnungen

Die Erfindung wird nachstehend anhand von Ausführungsbeispielen erläutert. Es zeigen:

Fig. 1 ein Schaltbild einer elektrischen Schutzeinrichtung mit drei alternativen Schutzobjekten mit je zwei Eingängen und einem Mikrorechner zur Auswertung von Strommesssignalen,

Fig. 2 ein Schutzobjekt mit drei Eingängen,

Fig. 3 ein Strom-Zeit-Diagramm eines Strom-Eingangssignals des Schutzobjektes gemäss den Fig. 1 und 2 mit zwölf Strom-Abtastwerten,

Fig. 4 eine Auslösekennlinie für Differentialschutz bei einer Schutzeinrichtung gemäss Fig. 1 und

Fig. 5 ein vereinfachtes Flussdiagramm zur Auswertung der dem Mikrorechner gemäss Fig. 1 zugeführten Signale.

Wege zur Ausführung der Erfindung

In Fig. 1 ist mit 1 eine erste dreiphasige Hochspannungsleitung bezeichnet, die über einen ersten elektrischen Schalter 2 und einen ersten Stromdetektor bzw. Stromwandler 3 je Wechselstromphase mit einem dreiphasigen Schutzobjekt, d.h. einer zu schützenden Leitung 4 oder einem zu schützenden Generator 5 oder einem zu schützenden Transformator 6 in Stern-Dreieck-bzw. Yd5-Schaltung, einem zweiten Stromwandler 8 und einem zweiten elektrischen Schalter 9 mit einer zweiten dreiphasigen Hochspannungsleitung 11 elektrisch verbunden ist. Zum Schutzobjekt fliessende Ströme sind mit $i_1$ bzw. $i_2$ bezeichnet. Die zu diesen Strömen proportionalen Wechselstrommesssignale an den Messsignalausgängen der Stromwandler 3 bzw. 8 sind mit $I_1'$ bzw. $I_2'$ bezeichnet. Mit 7 ist ein interner Fehler bzw. Kurzschluss bezüglich des Schutzobjektes 4 oder 5 oder 6 angedeutet und mit 10 ein externer Fehler.

Die beiden Wechselstrommesssignale $I_1'$ und $I_2'$ sind einem analogen Tiefpassfilter 12 zugeführt, das Frequenzen oberhalb der halben Abtastfrequenz $r \cdot f_N/2$ sperrt, wobei r die Abtastrate und $f_N$ die Netzfrequenz bedeuten. Bei einer Abtastrate $r = 12$ und einer Netzfrequenz $f_N = 50$ Hz beträgt die Abtastfrequenz 300 Hz.

Ausgangsseitig ist das Tiefpassfilter 12 über einen Uebertrager 13 mit einem Multiplexer bzw. einer Kanalanwahleinrichtung 14 verbunden, welche die gefilterten und erforderlichenfalls im Uebertrager 13 im Verhältnis 1:8 untersetzten Wechselstrommesssignale zeitlich nacheinander mit der Abtastrate $r = 12$ über einen Analog-Digital-Umsetzer 15 einem Mikrorechner 16 zuführt.

Dem Mikrorechner 16 ist zusätzlich ein Auslöseverhinderungssignal V z.B. von einem nicht dargestellten zweiten zu schützenden Transformator zugeführt, das im Falle von $V = 1$ zum Verhindern der Auslösung einer Schutzmassnahme verwendet wird. Mittels des Mikrorechners 16 werden die im Flussdiagramm von Fig. 5 angegebenen Bedingungen für die Auslösung der Schutzmassnahme geprüft. Im Fehlerfall wird ein Schutzauslösesignal $F = 1$ an die Schalter 2 und 9 geliefert, das deren Oeffnung bewirkt, so dass das Schutzobjekt 4 oder 5 oder 6 stromlos bzw. von den Hochspannungsleitungen 1 und 11 abgeschaltet wird.

Anstelle eines Schutzobjektes 4-6 mit $2 \cdot 3$ Anschlüssen kann auch ein Schutzobjekt mit $3 \cdot 3$ Anschlüssen vorgesehen sein, wie z.B. der in Fig. 2 dargestellte Dreiwicklungstransformator 17 in Yy6d5-Schaltung mit drei dreiphasigen Wechselströmen $i_1$-$i_3$, deren Vorzeichen entsprechend den eingezeichneten Pfeilen in Richtung zum Schutzobjekt zu werten ist. Mittels eines Stromwandlers 3,8 und 18 je Wechselstromphase werden zu diesen Wechselströmen $i_1$-$i_3$ proportionale Wechselstrommesssignale $I_1'$-$I_3'$ gewonnen und über das Tiefpassfilter 12, den Uebertrager 13, die Kanalanwahleinrichtung 14, den Analog-Digital-Umsetzer 15 dem Mikrorechner 16 gemäss Fig. 1 zur weiteren Auswertung zugeführt.

In Fig. 3 ist beispielsweise der Verlauf des nennfrequenten Wechselstromes $i_1$ gemäss Fig. 1 über die Zeit t aufgetragen. T bezeichnet die Periodendauer von $i_1$. Mit $t_1, t_2 \ldots t_r$ sind Zeitpunkte je Wechselstromperiode T bezeichnet, an denen die gefilterten und erforderlichenfalls amplitudenmodifizierten Wechselstrommesssignale $I_1'$ und $I_2'$ in der Kanalanwahleinrichtung 14 abgetastet bzw. für die Auswertung erfasst werden. Je Wechselstromperiode T werden somit zwölf modifizierte Wechselstrommesssignale im Zeitabstand von T/12 dem Mikrorechner 16 zur Auswertung zur Verfügung gestellt.

Fig. 4 zeigt die für den Differentialschutz verwendete Auslösekennlinie K. Auf der Ordinate ist das Verhältnis $\Delta I/I_N$ von Differenzstrom $\Delta I$ zu Nennstrom $I_N$ und auf der Abszisse das Verhältnis $I_H/I_N$ von Haltestrom $I_H$ zu Nennstrom $I_N$ aufgetragen. Die Auslösekennlinie K verläuft für einen Wertebereich von $I_H/I_N$

von 0 bis zu einem vorgebbaren Wert a parallel zur Abszisse mit einer vorgebbaren Grundeinstellung bzw. einem vorgebbaren Ordinatenwert $\Delta I/I_N$ von g, wobei $g \cdot I_N$ ein vorgebbarer erster Grenzwert ist, der vorzugsweise im Bereich von $0{,}05I_N$-$0{,}5I_N$, im Falle eines Transformators bei $0.3 \cdot I_N$ liegt. $a \cdot I_N$ ist ein vorgebbarer zweiter Grenzwert, der im Bereich von $0{,}1I_N$-$0{,}5I_N$, vorzugsweise im Bereich $0{,}2I_N$-$0{,}5I_N$, insbesondere bei $0{,}3I_N$ liegt. Danach verläuft die Auslösekennlinie K für grössere Werte von $I_H/I_N$ längs einer Geraden mit einem vorgebbaren Ansprechverhältnis bzw. einer vorgebbaren Steigung m, entsprechend einem dritten Grenzwert, vorzugsweise im Bereich von 0,05-1, insbesondere im Wertebereich von 0,25-0,5.

In einem mit A bezeichneten Bereich unterhalb der so definierten Auslösekennlinie K erfolgt keine Schutzauslösung. In einem mit B bezeichneten Bereich oberhalb der so definierten Auslösekennlinie K erfolgt für Werte von $I_H/I_N<b$ stets eine Schutzauslösung, wobei b ein vorgebbarer Grenzbetriebsstrom ist, entsprechend einem vierten Grenzwert $b \cdot I_N$, der vorzugsweise im Wertebereich von 0,5 $I_N$-$10I_N$, insbesondere im Wertebereich von $I_N$-$2I_N$ liegt. Der Grenzbetriebsstrom b muss grösser als der grösstmögliche Betriebsstrom z.B. des Generators 5 sein, um bei inneren Kurzschlüssen 7 mit durchfliessenden Strömen eine sichere Abschaltung zu bewirken. Ist eine starke und ungleiche Stromwandlersättigung zu befürchten, so muss b möglichst klein gewählt werden. In einem mit C bezeichneten Bereich erfolgt für Werte von $I_H/I_N>b$ oberhalb der Auslösekennlinie K nur dann eine Schutzauslösung, wenn ein Stromamplitudenverhältnis $IA_X/I_N<b$ oder $IB_X/I_N<b$ ist, wobei $IA_X$ und $IB_X$ berechnete erste und zweite Wechselstromsignale sind, die nachfolgend anhand des Flussdiagramms von Fig. 5 näher erläutert werden.

Nach einem Programmstart 19 werden in einem Operationsblock 20 Anfangsbedingungen gesetzt. nE bezeichnet die Zahl der Eingänge n = 1,2...nE des Schutzobjektes, wobei im Falle von Fig. 1 nE = 2 und im Falle von Fig. 3 nE = 3 ist. XE bezeichnet die Anzahl der Wechselspannungsphasen X = 1,2,3,...,XE, wobei X = 1,2,3 den Phasen R,S,T entspricht, vgl. in Fig. 1 den Transformator 6. Bei dem dort dargestellten Transformator in Stern-Dreieck-Schaltung sind die sternseitigen Ströme mit $i_R, i_S, i_T$ bezeichnet und die davon mittels Stromwandlern 3 abgeleiteten Wechselstrommesssignale mit $I_{11}'$, $I_{12}'$ und $I_{13}'$. Die dreieckseitigen Ströme sind mit $i_R', i_S', i_T'$ bezeichnet und die davon mittels Stromwandlern 8 abgeleiteten Wechselstrommesssignale mit $I_{21}', I_{22}'$ und $I_{23}'$. lE bezeichnet die Anzahl der mittels Fourier-Analyse zu berechnenden Teilschwingungen l = 1...lE, wobei l = 1 die Grundschwingung bedeutet. G1 bezeichnet einen Minimalstromgrenzwert, G2 einen Oberschwingungsgrenzwert und $\omega$ die Kreisfrequenz.

In einem nicht näher detaillierten ersten Unterprogramm 21 werden für n = 1...nE und X = 1...XE Wechselstrommesssignale $I_{nX}'$ in den Mikrorechner 16 eingelesen und für die Abtastzeitpunkte t1,t2...tr einer Periodendauer T gespeichert, vgl. Fig. 3.

In einem anschliessenden zweiten Unterprogramm 22 zur Schaltgruppen-Amplitudenanpassung werden, für den Fall, dass das Schutzobjekt ein Transformator ist, erforderliche Schaltgruppen-Amplitudenanpassungen vorgenommen, wobei $I_{nX}$ ein amplitudenangepasstes Wechselstrommesssignal und SG die jeweilige Schaltgruppe bezeichnet. $I_{nX}$ ist eine Funktion der Wechselstrommesssignale $I'_{nX}$ und der jeweilen Schaltgruppe SG.

Für einen Zweiwicklungstransformator der Schaltgruppe Yd5 gemäss Fig. 1 gilt für die Schaltgruppenanpassung:

$$I_{11} = (I'_{12} - I'_{11}) / \sqrt{3},$$
$$I_{12} = (I'_{13} - I'_{12}) / \sqrt{3},$$
$$I_{13} = (I'_{11} - I'_{13}) / \sqrt{3},$$

$I_{21} = I_{21}'$ , $I_{22} = I_{22}'$ und $I_{23} = I_{23}'$ . Zusätzlich können die Amplituden der Wechselstrommesssignale angepasst werden.

Für einen Dreiwicklungstransformator 17 der Schaltgruppe Yy6d5 gemäss Fig. 2 gilt z.B. für die Amplitudenanpassung:

$$I_{nX} = I'_{nX} \cdot U_{Nn} \cdot I_{CTn} \cdot \sqrt{3} / P_N,$$

wobei $U_{Nn}$ die jeweilige Nennspannung, $I_{CTn}$ den jeweiligen Stromwandlernennstrom und $P_N$ die gemeinsame Bezugsleistung bezeichnet.

Die Vergleichsströme der Sekundär- und Tertiärseite werden auf die Primärseite umgerechnet. Die Umrechnung kann erforderlichenfalls mittels empirischer Werte erfolgen.

In einem Unterprogramm 23 werden die erforderlichenfalls amplitudenangepassten Wechselstrommesssignale $I_{nX}$ einer Fourier-Analyse unterworfen, wobei für l = 1...lE, X = 1...XE und n = 1...nE der Realteil $I_{dlnX}$ und der Imaginärteil $I_{qlnX}$ der jeweiligen Teilschwingung $I_{lnX}$ berechnet wird. Es versteht sich, dass anstelle der Fourier-Analyse auch z.B. an sich bekannte sog. Haar-Funktionen zur Analyse verwendet werden könnten.

Im nachfolgenden Unterprogramm 24 werden für $l = 1 ... lE$, $X = 1 ... XE$ und $n = 1 ... nE$ die Teilschwingungen $I_{lnX} = I_{dlnX} + j \cdot I_{qlnX}$ berechnet, mit $j = \sqrt{-1}$, und der Differenzstrom

$$\Delta I_X = \left| \sum_{n=1}^{nE} I_{1nX} \right|$$

für $l = 1$, d.h. für die Grundschwingung.

In einem Operationsblock 25 wird ein erstes Wechselstromsignal $IA_X = \max(I_{1nX})$ als Grösswertsignal und ein zweites Wechselstromsignal

$$IB_X = \sum_{n=1}^{nE} I_{1nX} - IA_X$$

als Differenzsignal, bezogen auf die Grundschwingung, berechnet. Ferner wird ein Oberschwingungs-Wechselstromsignal $IA_{2X} = \max(I_{2nX})$ als Grösswertsignal der 1. Harmonischen berechnet.

Zur Berechnung des Haltestromes $I_{HX}$ wird anschliessend in einer Verzweigung 26 geprüft, ob $\cos(IA_X, -IB_X) = IA_X \cdot (-IB_X)/(|IA_X| \cdot |(-IB_X)|)$ bzw. ob $-IB_X \cdot IA_X \leqq 0$ ist. Wenn ja, wird in einem Operationsblock 28 $I_{HX} = 0$ gesetzt, andernfalls wird in einem Operationsblock 27 $I_{HX} = \sqrt{-IB_X \cdot IA_X}$ berechnet. Um ein Wurzelziehen zu vermeiden, kann auch mit $I_{HX}^2$ gerechnet werden, wobei die nachfolgenden Beziehungen, in denen $I_{HX}^2$ vorkommt, entsprechend anzupassen sind. In skalarer Komponentenschreibweise gilt für den Haltestrom $I_H$:

$I_H = \sqrt{|IA| \cdot |IB| \cdot \cos(IA, -IB)}$ für $\cos(IA, -IB) \geqq 0$ und

$I_H = 0$ für $\cos(IA, -IB) < 0$.

In den nachfolgenden Verzweigungen 29 und 30 werden die Auslösebedingungen getestet. In der Verzweigung 29 wird verglichen, ob $\Delta I_X/I_N > g$ oder $\Delta I_X > mI_{HX}$ ist. Wenn ja, wird in der Verzweigung 30 verglichen, ob $IA_X/I_N < b$ oder $IB_X/I_N < b$ ist. Wenn nein, wird nach beiden Verzweigungen 29 und 30 in einer Verzweigung 31 verglichen, ob $IA_X(t-qT) > G1 = I_N/10$ ist, d.h. ob vor einer vorgebbaren Zeitdauer von vorzugsweise $q = 5$ nennfrequenten Periodendauern T das erste berechnete Wechselstromsignal einen vorgebbaren Minimalstromgrenzwert G1 überschritten hat. Wenn ja, wird in einem Operationsblock 32 eine Weiche W auf den Wert 0 gesetzt und zum Eingang von 21 gesprungen; bei nein wird gleich zum Eingang von 21 gesprungen. G1 wird vorzugsweise $= I_N/100$ gewählt, d.h. möglichst klein. q wird im Wertebereich von 1 bis 10 gewählt.

Wenn das Ergebnis der Verzweigung 30 "ja" lautet, so wird in einer Verzweigung 33 verglichen, ob ein externes Auslöseverhinderungssignal V oder die Weiche W den logischen Wert 1 haben. Wenn ja, wird in einem Operationsblock 36 die Weiche W auf den Wert 1 gesetzt und anschliessend in einer Verzweigung 37 verglichen, ob $|IA_{2X}|/|IA_X| > G2$ ist, d.h., ob das Amplitudenverhältnis der Grösstwerte je Eingang n und Phase X von erster Harmonischer zur Grundschwingung einen vorgebbaren Oberschwingungsgrenzwert $G2 = 0,15$ überschreitet. Wenn ja, wird zum Eingang von 21 gesprungen, andernfalls und auch dann, wenn das Ergebnis der Verzweigung 33 "nein" lautet, wird in einem Operationsblock 34 das Schutzauslösesignal F auf logisch 1 gesetzt und danach zum Programmende 35 gegangen. G2 wird vorzugsweise im Bereich von 0,1-0,2 gewählt. Anstelle der Amplitude der ersten Harmonischen $I_{2nX}$ kann auch die Amplitude einer anderen geradzahligen Harmonischen für den Vergleich herangezogen werden. Durch den Vergleich in der Verzweigung 33 kann z.B. verhindert werden, dass Einschaltstromstösse durch das Zuschalten parallelgeschalteter Transformatoren (nicht dargestellt) zu einer ungewollten Schutzauslösung führen.

Von besonderer Wichtigkeit für die vorliegende Erfindung sind die spezielle Berechnung des Haltestromes $I_H$ sowie der Bereich C, in dem eine bedingte Schutzauslösung erfolgt.

Mit dem erfindungsgemässen Verfahren werden zwei- und dreiphasige innere Kurzschlüsse 7, Wicklungskurzschlüsse und bei niederohmiger Sternpunkterdung auch Ständerkurzschlüsse von Generatoren erfasst. Bei Wechselströmen $i_n > 2I_N$ erfolgt die Schutzauslösung, d.h. die Abgabe des Auslösebefehls zur Oeffnung der Schalter 2 und 9 gemäss Fig. 1, ohne Relais, innerhalb von 20 ms und bei $i_n < 2I_N$ innerhalb

von 40 ms.

Bei ungleicher Sättigung der Stromwandler 3,8,18 und äusserem Kurzschluss 10 ist der Haltestrom $I_H$ wie erwünscht gross. Die maximale Vorverschiebung der 50-Hz-Stromkomponente durch eine Sättigung der Stromwandler ist < 90°, typisch bis ca. 60°, d.h., es ist $\cos(IA_X,-IB_X)>0{,}5$ und damit i.a. $I_H>I_N$. Die Gefahr der Unterfunktion bei einseitig gespeistem innerem Kurzschluss 7 und durch das Schutzobjekt 4-6,17 fliessendem Laststromanteil wird dadurch vermieden, dass bei einem kleinen Wechselstrom ($IA_X/I_N<b$ oder $IB_X/I_N<b$) auf einer Seite und gleichzeitig grosser Realteilkomponente $I_{d1nX}$ eine Auslösung erfolgt. Interne Kurzschlüsse 7 werden bei Stromwandlersättigung ausreichend schnell detektiert. Bei internen Kurzschlüssen 7 und grösseren Differenzströmen ( $\Delta I>I_N$) kommt man typischerweise innerhalb 5 ms ins Auslösegebiet B oder C.

Das erfindungsgemässe Verfahren erfordert bei der Erfassung von Einschaltstromstössen in Transformatoren einen geringen Rechenaufwand, da die Berechnung des Amplitudenverhältnisses von 2. zu 1. Harmonischer nur für die Phase mit maximaler Wechselstromamplitude durchgeführt zu werden braucht. Eine Abschaltung ist auch dann gewährleistet, wenn zusätzlich zu einem Einschaltstrommstoss ein 1- oder mehrpoliger Kurzschluss vorliegt.

**Patentansprüche**

**1.** Verfahren zum Schutz eines mindestens einphasigen elektrischen Schutzobjektes (4 - 6, 17) vor Überströmen

a) bei dem je Wechselstromphase in Abhängigkeit von mindestens einer Grenzwertüberschreitung eines Differenzstromes ($\Delta I$) zwischen mindestens einem in das Schutzobjekt hineinfliessenden 1. Wechselstrom ($i_1$) und mindestens einem aus dem Schutzobjekt herausfliessenden 2. Wechselstrom ($-i_2$, $-i_3$) oder in Abhängigkeit von der Summe aller Schutzobjektströme

b) mindestens ein Schutzauslösesignal (F = 1) an mindestens eine Schutzeinrichtung (2, 9) geliefert wird,

c1) wobei das Schutzauslösesignal erzeugt wird, wenn der Differenzstrom ($\Delta I$) grösser als ein vorgebbarer 1. Grenzwert ($g \cdot I_N$) und

c2) gleichzeitig ein die Auslösung zurückhaltender Haltestrom ($I_H$) kleiner als ein vorgebbarer 2. Grenzwert ($a \cdot I_N$) ist und zusätzlich

d1) wenn der Haltestrom ($I_H$) ≧ dem 2. Grenzwert ($a \cdot I_N$) und

d2) gleichzeitig der Differenzstrom ($\Delta I$) > $m \cdot I_H$ ist, wobei m einen vorgebbaren 3. Grenzwert bezeichnet,

dadurch gekennzeichnet,

e) dass für Halteströme ($I_H$), die grösser als ein vorgebbarer 4. Grenzwert ($b \cdot I_N$) sind, nur dann ein Schutzauslösesignal (F = 1) erzeugt wird, wenn ein 1. Schutzobjektstrom bzw. ein 1. Wechselstromsignal (IA) oder ein 2. Schutzobjektstrom bzw. ein 2. Wechselstromsignal (IB) kleiner als der 4. Grenzwert ($b \cdot I_N$) ist, und

f) dass der Haltestrom gemäss: $I_H = \sqrt{|IA| \cdot |IB| \cdot \cos\ (IA,\ -IB)}$ für cos (IA, -IB) > 0 und $I_H = 0$ für cos (IA, -IB) ≦ 0 gebildet wird, wobei die 1. und 2. Wechselstromsignale (IA, IB) in Abhängigkeit von grundfrequenten Stromkomponenten von einem in das Schutzobjekt hineinfliessenden ($i_1$) bzw. einem aus dem Schutzobjekt herausfliessenden Wechselstrom ($-i_2$, $-i_3$) gebildet sind.

**2.** Verfahren nach Anspruch 1, dadurch gekennzeichnet,

a) dass der 1. Grenzwert ($g \cdot I_N$) im Bereich von 5 % - 50 % des Nennstromes ($I_N$) liegt und

b) dass der 2. Grenzwert ($a \cdot I_N$) im Bereich von 10 % - 50 % des Nennstromes ($I_N$) liegt.

**3.** Verfahren nach Anspruch 1 oder 2, dadurch gekennzeichnet, dass der 3. Grenzwert (m) im Bereich zwischen 0,25 und 0,5 liegt.

**4.** Verfahren nach einem der Ansprüche 1 bis 3, dadurch gekennzeichnet,

a) dass der 4. Grenzwert ($b \cdot I_N$) im Bereich zwischen dem 0,5 - 10fachen des Nennstromes ($I_N$),

b) insbesondere im Bereich zwischen dem 1 - 2fachen des Nennstromes ($I_N$) liegt.

**5.** Verfahren nach einem der Ansprüche 1 bis 4, dadurch gekennzeichnet,

a) dass in Abhängigkeit von dem mindestens einen in das Schutzobjekt hineinfliessenden ($i_1$) und in Abhängigkeit von dem mindestens einen aus dem Schutzobjekt herausfliessenden Wechselstrom ($-i_2$, $-i_3$) die 1. und 2. Wechselstromsignale (IA, IB) aus zu diesen Wechselströmen proportionalen

Wechselstrommesssignalen ($I_1$' - $I_3$', $I_{nX}$') gebildet werden,
b) welche nach einer Tiefpassfilterung (12)
c) einer Fourier-Analyse (23) unterworfen werden,
d) aus der wenigstens die netzfrequenten, zueinander orthogonalen Schwingungskomponenten ($I_{d1nX}$, $I_{q1nX}$) gemäss:

$$I_{d1nX} = \frac{1}{r} \cdot \sum_{k=1}^{r} I_{nX} (1kT/r) \cdot \sin (1k\omega T/r)$$

$$I_{q1nX} = \frac{1}{r} \cdot \sum_{k=1}^{r} I_{nX} (1kT/r) \cdot \cos (1k\omega T/r)$$

ausgewählt und
f) zur weiteren Berechnung des Differenzstromes $\Delta I_X$ gemäss

$$\Delta I_X = \left| \sum_{n=1}^{nE} I_{1nX} \right|$$

mit

$I_{1nX} = I_{d1nX} + j \cdot I_{q1nX}$

verwendet werden,
g) dass das 1. Wechselstromsignal (IA) gemäss

$IA_X = \max (I_{1nX})$

und
h) dass das 2. Wechselstromsignal (IB) gemäss

$$IB_X = \sum_{n=1}^{nE} I_{1nX} - IA_X$$

berechnet werden, mit n = Variable für die Eingänge des Schutzobjektes, nE = Zahl der Eingänge, l = Variable für die mittels Fourier-Analyse zu berechnenden Teilschwingungen, X = Variable für die Wechselstromphase, j = $\sqrt{-1}$, r = Abtastrate, $\omega$ = Kreisfrequenz.

**6.** Verfahren nach Anspruch 5, dadurch gekennzeichnet, dass nach der Tiefpassfilterung (12) und vor der Fourier-Analyse (23) eine Amplitudenanpassung (22) in Abhängigkeit von einer Schaltgruppe (SG) durchgeführt wird.

**7.** Verfahren nach Anspruch 5 oder 6, dadurch gekennzeichnet, dass eine Schutzauslösung verhindert wird,
a) wenn das Amplitudenverhältnis einer geradzahligen Harmonischen zum grundfrequenten Anteil bei einer Wechselspannungsphase grösser als ein vorgebbarer 6. Grenzwert (G2) ist, wobei das Amplitudenverhältnis nur für die Phase mit maximaler Wechselstromamplitude berechnet wird,
b) wenn ein externes Auslöseverhinderungssignal (V = 1) vorliegt.

**8.** Verfahren nach Anspruch 7, dadurch gekennzeichnet, dass der 6. Grenzwert (G2) im Bereich von 0,1 - 0,2 liegt.

9. Verfahren nach Anspruch 7 oder 8, dadurch gekennzeichnet, dass eine Schutzauslösung verhindert wird, wenn das 1. oder 2. Wechselstromsignal (IA, IB) vor einer vorgebbaren Zeitdauer von mindestens der q-fachen Periodendauer (T) des Wechselstromes einen vorgebbaren 5. Grenzwert (G1) nicht überschritten hat, wobei q ein vorgebbarer Zeitfaktor ist, der im Bereich von 1 - 10 liegt.

**Claims**

1. Method for protecting an at least single-phase electric object to be protected (4-6,17) against overcurrents,
   a) in which for each alternating-current phase, in dependence on at least one limit-value transgression of a difference current ($\Delta I$) between at least one first alternating current ($i_1$) flowing into the object to be protected and at least one second alternating current ($-i_2,-i_3$) flowing out of the object to be protected, or, in dependence on the sum of all currents of the object to be protected,
   b) at least one protective tripping signal ($F=1$) is supplied to at least one protective device (2,9),
   c1) the protective tripping signal being generated when the difference current ($\Delta I$) is greater than a predeterminable first limit value ($g.I_N$) and
   c2) at the same time, a holding current ($I_H$), which holds back the tripping, is less than a predeterminable second limit value ($a.I_N$) and in addition
   d1) when the holding current ($I_H$) $\geqq$ the second limit value ($a \cdot I_N$) and
   d2) at the same time, the difference current ($\Delta I$) $> m \cdot I_H$, m designating a predeterminable third limit value, characterised in that
   e) for holding currents ($I_H$) which are greater than a predeterminable fourth limit value ($b \cdot I_N$), a protective tripping signal ($F = 1$) is only generated when a first current of the object to be protected or a first alternating-current signal (IA) or a second current of the object to be protected or a second alternating-current signal (IB) is lower than the fourth limit value ($b \cdot I_N$), and in that
   f) the holding current is formed in accordance with:
   $I_H = \sqrt{|IA| \cdot |IB| \cdot \cos(IA, -IB)}$ for $\cos(IA, -IB) > 0$ and
   $I_H = 0$ for $\cos(IA, -IB) \leqq 0$, the first and second alternating-current signals (IA, IB) being formed in dependence on fundamental-frequency current components of an alternating current flowing into the object to be protected ($i_1$) or an alternating current flowing out of the object to be protected ($-i_2$, $-i_3$).

2. Method according to Claim 1, characterised in that
   a) the first limit value ($g.I_N$) is within the range from 5%-50% of the nominal current ($I_N$) and
   b) the second limit value ($a.I_N$) is within the range from 10%-50% of the nominal current ($I_N$).

3. Method according to Claim 1 or 2, characterised in that the third limit value (m) is within the range between 0.25 and 0.5.

4. Method according to one of Claims 1 to 3, characterised in that
   a) the fourth limit value ($b.I_N$) is within the range between 0.5-10 times the nominal current ($I_N$),
   b) particularly within the range between 1-2 times the nominal current ($I_N$).

5. Method according to one of Claims 1 to 4, characterised in that
   a) in dependence on the at least one alternating current ($i_1$) flowing into the object to be protected and in dependence on the at least one alternating current ($-i_2,-i_3$) flowing out of the object to be protected, the first and second alternating-current signals (IA,IB) are formed from alternating-current measuring signals ($I_1'$-$I_3'$,$I_{nX}'$) proportional to these alternating currents,
   b) which, after low-pass filtering (12)
   c) are subjected to a Fourier analysis (23),
   d) from which at least the line-frequency mutually orthogonal oscillation components ($I_{d1nX}$, $I_{q1nX}$) are selected in accordance with:

$$I_{d1nX} = \frac{1}{r} \cdot \sum_{k=1}^{r} I_{nX}(1kT/r) \cdot \sin(1K\omega T/r)$$

$$I_{q1nX} = \frac{1}{r} \cdot \sum_{k=1}^{r} I_{nX}(1kT/r) \cdot \cos(1k\omega T/r)$$

and

f) are used for further calculation of the difference current $\Delta I_X$, in accordance with

$$\Delta I_X = \sum_{n=1}^{nE} I_{1nX}$$

with

$I_{1nX} = I_{d1nX} + j \cdot I_{q1nX}$

g) the first alternating-current signal (IA) is calculated in accordance with

$IA_X = \max(I_{nX})$

and

h) the second alternating-current signal (IB) is calculated in accordance with

$$IB_X = \sum_{n=1}^{nE} I_{1nX} - IA_X$$

with n = variable for the inputs of the object to be protected, nE = number of inputs, 1 = variable for the partial oscillations to be calculated by means of Fourier analysis, X = variable for the alternating-current phase, $j = \sqrt{-1}$, r = sampling rate, $\omega$ = angular frequency.

**6.** Method according to Claim 5, characterised in that, after the low-pass filtering (12) and before the Fourier analysis (23), an amplitude matching (22) is carried out in dependence on a switching group (SG).

**7.** Method according to Claim 5 or 6, characterised in that a protective tripping is prevented

a) when the amplitude ratio between an even-numbered harmonic and the fundamental-frequency component in one alternating-voltage phase is greater than a predeterminable sixth limit value (G2), the amplitude ratio only being calculated for the phase with the maximum alternating-current amplitude,

b) when an external tripping inhibit signal (V = 1) is present.

**8.** Method according to Claim 7, characterised in that the sixth limit value (G2) is within the range from 0.1-0.2.

**9.** Method according to Claim 7 or 8, characterised in that a protective tripping is prevented when the first or second alternating-current signal (IA, IB) has not exceeded a predeterminable fifth limit value (G1) before a predeterminable period of at least q times the period (T) of the alternating current, q being a predeterminable time factor which is within a range from 1-10.

## Revendications

**1.** Procédé pour protéger un objet électrique à protéger (4 - 6, 17), au moins monophasé, contre des surintensités de courant

a) dans lequel, pour chaque phase du courant alternatif, en fonction d'au moins un dépassement de valeur limite d'un courant différentiel ($\Delta I$) entre au moins un premier courant alternatif ($i_1$) entrant dans l'objet à protéger et au moins un second courant alternatif ($-i_2$, $-i_3$) sortant de l'objet à protéger ou en fonction de la somme de tous les courants de l'objet à protéger
b) au moins un signal de déclenchement de protection (F = 1) est fourni au moins à un dispositif de protection (2, 9),
c1) le signal de déclenchement de protection étant produit lorsque le courant différentiel ($\Delta I$) est supérieur à une première valeur limite pouvant être prédéfinie ($g \cdot I_N$) et
c2) simultanément, un courant de maintien ($I_H$) retenant le déclenchement est inférieur à une deuxième valeur limite pouvant être prédéfinie ($a \cdot I_N$) et, en outre,
d1) lorsque le courant de maintien ($I_H$) $\geqq$ la seconde valeur limite ($a \cdot I_N$) et
d2) que, simultanément, le courant différentiel ($\Delta I$) > $m \cdot I_H$, m désignant une troisième valeur limite pouvant être prédéfinie, caractérisé en ce
e) que pour des courants de maintien ($I_H$) qui sont supérieurs à une quatrième valeur limite pouvant être prédéfinie ($b \cdot I_N$), un signal de déclenchement de protection (F = 1) n'est produit que lorsqu'un premier courant d'objet à protéger ou un premier signal de courant alternatif (IA) ou un deuxième courant d'objet à protéger ou un deuxième signal de courant alternatif (IB) est inférieur à la quatrième valeur limite ($b \cdot I_N$), et
f) que le courant de maintien selon:
$I_H = \sqrt{|IA| \cdot |IB| \cdot \cos\ (IA,\ -IB)}$ pour cos (IA, -IB) > 0 et
$I_H = 0$ pour cos (IA, -IB) $\leqq 0$
est formé, de sorte que les premier et second signaux de courant alternatif (IA, IB) sont formés en fonction de composantes de courant à la fréquence de base à partir d'un courant alternatif ($i_1$) pénétrant dans l'objet à protéger et d'un courant alternatif ($-i_2$, $-i_3$) sortant de l'objet à protéger, respectivement.

**2.** Procédé suivant la revendication 1, caractérisé en ce que
a) la première valeur limite ($g \cdot I_N$) est située dans le domaine allant de 5 % à 50 % du courant nominal ($I_N$) et
b) que la deuxième valeur limite ($a \cdot I_N$) est située dans le domaine allant de 10 % à 50 % du courant nominal ($I_N$).

**3.** Procédé suivant la revendication 1 ou 2, caractérisé en ce que la troisième valeur limite (m) est située dans le domaine compris entre 0,25 et 0,5.

**4.** Procédé suivant l'une quelconque des revendications 1 à 3, caractérisé en ce que
a) la quatrième valeur limite ($b \cdot I_N$) est située dans le domaine valant de 0,5 à 10 fois le courant nominal ($I_N$),
b) en particulier dans le domaine valant 1 à 2 fois la courant nominal ($I_N$).

**5.** Procédé suivant l'une quelconque des revendications 1 à 4, caractérisé en ce que
a) en fonction du au moins un courant alternatif ($i_1$) qui pénètre dans l'objet à protéger et en fonction du au moins un courant alternatif ($-i_2$, $-i_3$) qui sort de l'objet à protéger, les premiers et deuxièmes signaux de courant alternatif (IA, IB) sont formés à partir de signaux de mesure de courant alternatif ($I_1' - I_3'$, $I_{nX}'$) proportionnels à ces courants alternatifs,
b) qui, après un filtrage passe-bas (12),
c) sont soumis à une analyse de Fourier (23),
d) de laquelle au moins les composantes d'oscillations perpendiculaires l'une à l'autre, à la fréquence du réseau, ($I_{d1nX}$, $I_{q1nX}$), sont sélectionnées selon :

$$I_{d1nX} = \frac{1}{r} \cdot \sum_{k=1}^{r} I_{nX}(lkT/r) \cdot \sin(lk\omega T/r)$$

$$I_{q1nX} = \frac{1}{r} \cdot \sum_{k=1}^{r} I_{nX}(lkT/r) \cdot \cos(lk\omega T/r)$$

et

f) sont utilisées pour le calcul ultérieur du courant différentiel $\Delta I_X$ selon

$$\Delta I_X = \left|\sum_{n=1}^{nE} I_{1nX}\right|$$

où

$I_{1nX} = I_{d1nX} + j \cdot I_{q1nX}$

g) que le premier signal de courant alternatif (IA) est calculé selon

$IA_X = \max(I_{1nX})$

et

h) que le deuxième signal de courant alternatif (IB) est calculé selon

$$IB_X = \sum_{n=1}^{nE} I_{1nX} - IA_X$$

où n = variable pour les entrées de l'objet à protéger, nE = nombre des entrées, l = variable pour les oscillations partielles à calculer au moyen de l'analyse de Fourier, X = variable pour la phase de courant alternatif, $j = \sqrt{-1}$, r = cadence d'échantillonnage, $\omega$ = fréquence angulaire.

**6.** Procédé suivant la revendication 5, caractérisé en ce qu'après le filtrage passe-bas (12) et avant l'analyse de Fourier (23), une adaptation d'amplitude (22) est effectuée en fonction d'un couplage (SG).

**7.** Procédé suivant la revendication 5 ou 6, caractérisé en ce qu'un déclenchement de protection est empêché,

a) lorsque le rapport d'amplitude d'un harmonique entier à la fraction à la fréquence de base dans le cas d'une phase de tension alternative est supérieur à une sixième valeur limite pouvant être prédéfinie (G2), le rapport d'amplitude n'étant calculé que pour la phase à amplitude de courant alternatif maximale que

b) lorsqu'un signal inhibiteur de déclenchement externe (V = 1) est présent.

**8.** Procédé suivant la revendication 7, caractérisé en ce que la sixième valeur limite (G2) se situe dans le domaine compris entre 0,1 et 0,2.

**9.** Procédé suivant la revendication 7 ou 8, caractérisé en ce qu'un déclenchement de protection est empêché lorsque le premier ou le second signal de courant alternatif (IA, IB) n'a pas dépassé par excès une cinquième valeur limite pouvant être prédéfinie (G1) avant une durée prédéfinie d'au moins q-fois la période (T) du courant alternatif, étant entendu que q est un facteur temps pouvant être prédéfini qui se situe dans le domaine de 1 à 10.

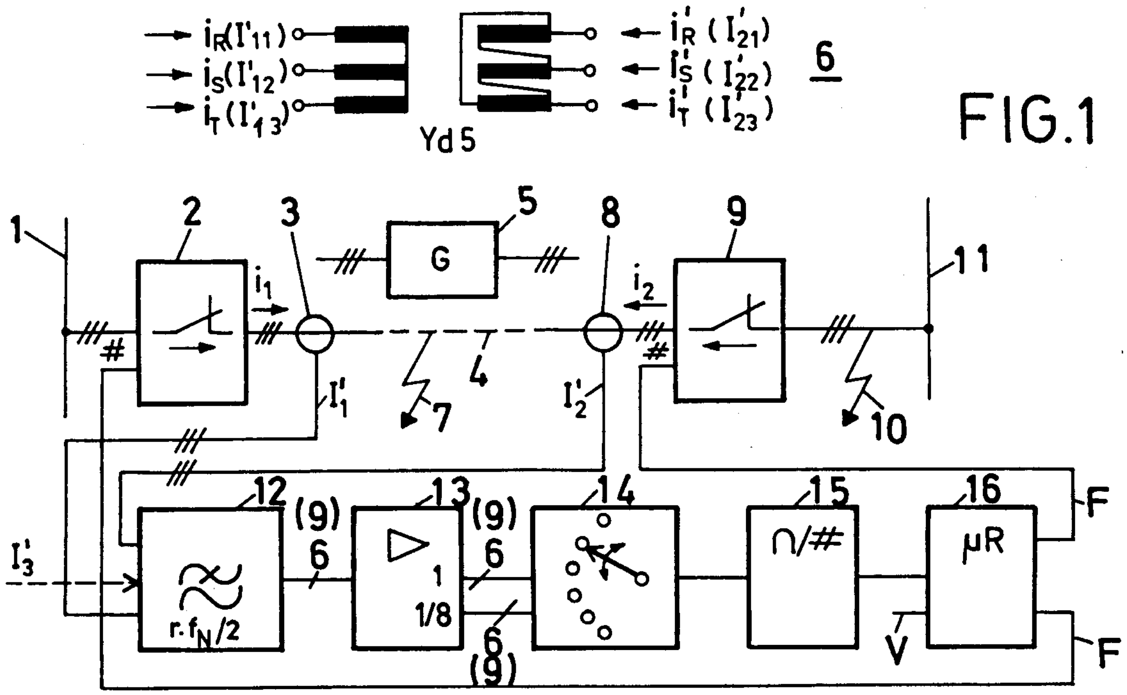


FIG.1

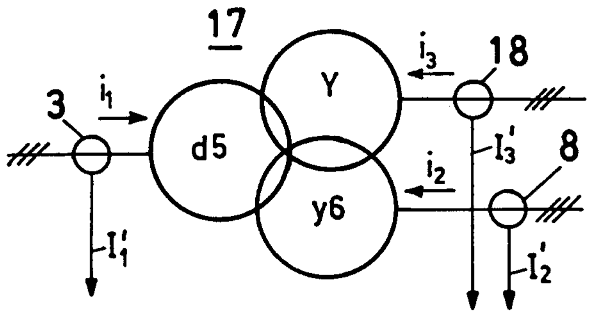


FIG.2

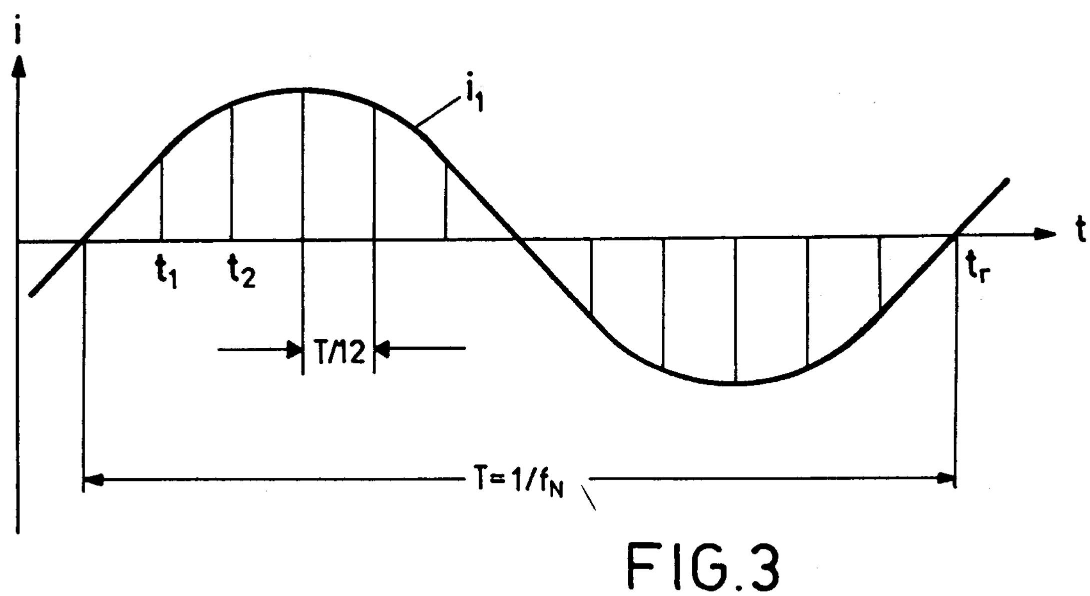


FIG.3

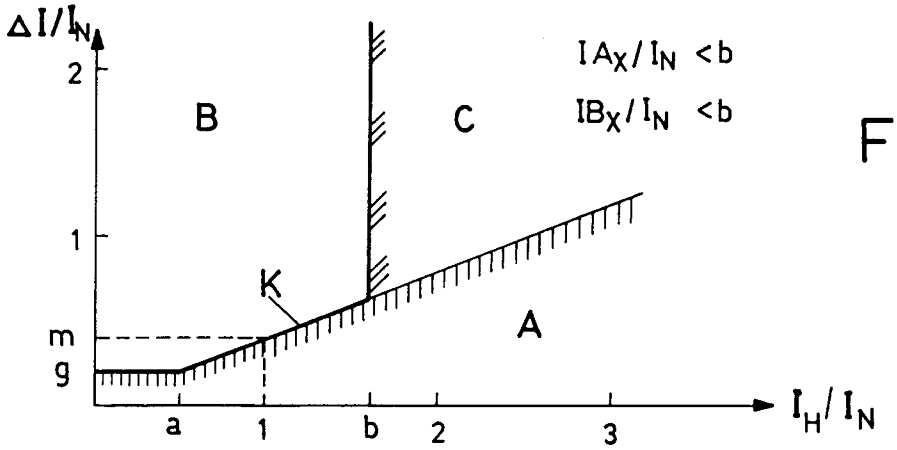
ΔI/I_N
2
1
m
g
B
C
A
K
IA_X/I_N <b
IB_X/I_N <b
a
1
b
2
3
I_H/I_N

FIG.4

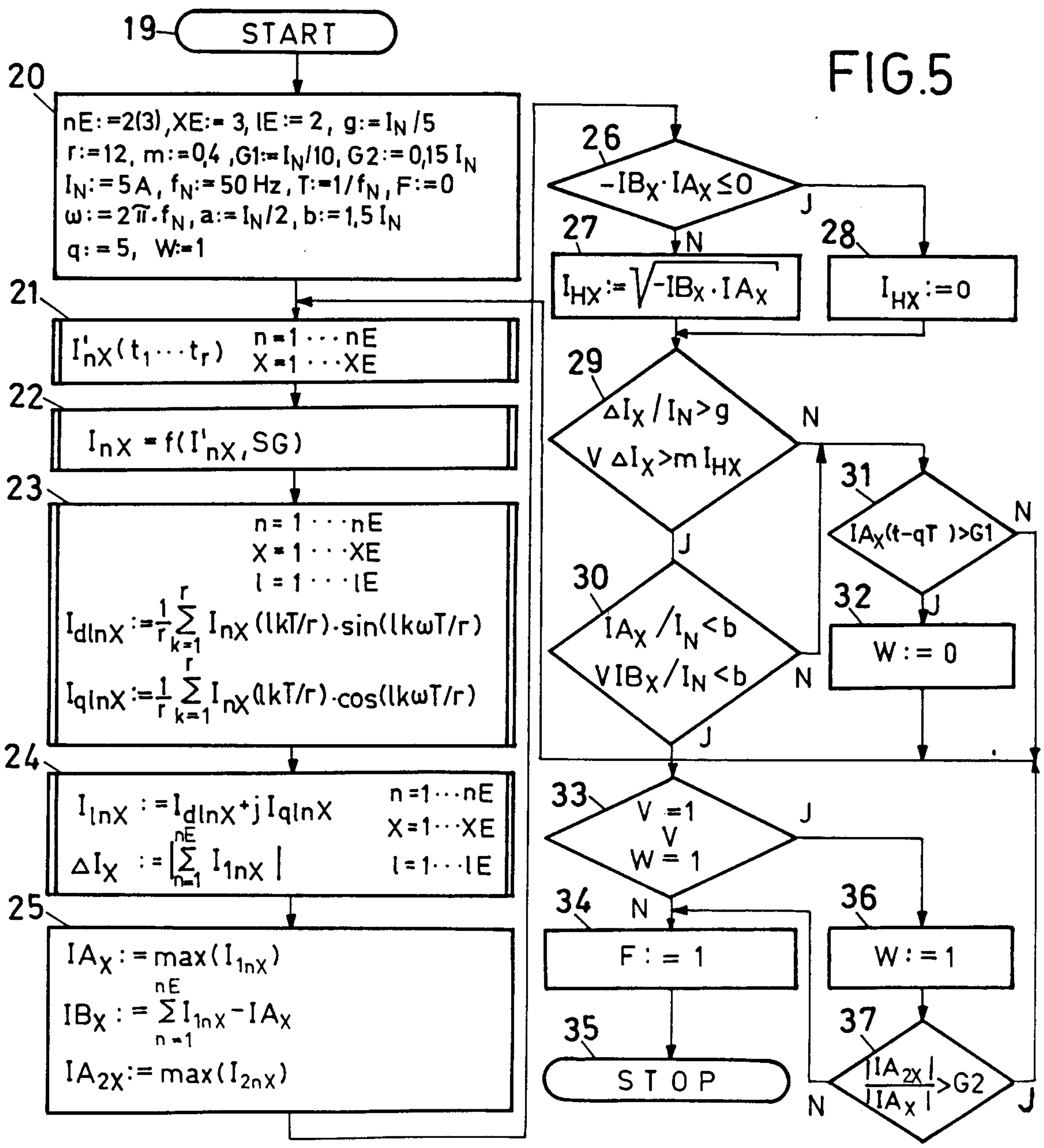
19
START
20
nE:=2(3), XE:=3, lE:=2, g:=I_N/5
r:=12, m:=0,4, G1:=I_N/10, G2:=0,15 I_N
I_N:=5A, f_N:=50 Hz, T:=1/f_N, F:=0
ω:=2π·f_N, a:=I_N/2, b:=1,5 I_N
q:=5, W:=1
21
I'_nX(t_1···t_r) n=1···nE X=1···XE
22
I_nX = f(I'_nX, SG)
23
n=1···nE
X=1···XE
l=1···lE
I_dlnX := 1/r Σ_{k=1}^{r} I_nX(lkT/r)·sin(lkωT/r)
I_qlnX := 1/r Σ_{k=1}^{r} I_nX(lkT/r)·cos(lkωT/r)
24
I_lnX := I_dlnX + j I_qlnX
ΔI_X := |Σ_{n=1}^{nE} I_1nX|
n=1···nE
X=1···XE
l=1···lE
25
IA_X := max(I_1nX)
IB_X := Σ_{n=1}^{nE} I_1nX − IA_X
IA_2X := max(I_2nX)
26
−IB_X·IA_X ≤ 0
J
N
27
I_HX := √(−IB_X·IA_X)
28
I_HX := 0
29
ΔI_X/I_N > g
V ΔI_X > m I_HX
N
J
30
IA_X/I_N < b
V IB_X/I_N < b
N
J
31
IA_X(t−qT) > G1
N
J
32
W := 0
33
V = 1
V
W = 1
J
N
34
F := 1
35
STOP
36
W := 1
37
|IA_2X|/|IA_X| > G2
N
J

FIG.5